# EUROPÄISCHE PATENTSCHRIFT

(11) **EP 1 936 151 B1**
(45) Veröffentlichungstag und Bekanntmachung des Hinweises auf die Patenterteilung: **16.10.2013**
(21) Anmeldenummer: 07014750.9
(22) Anmeldetag: 27.07.2007
(51) Int. Cl.: F02D 9/10, F02M 3/07

(54) **Verfahren zum Herstellen einer Vorrichtung zur Steuerung des Durchflusses eines gasförmigen oder flüssigen Mediums**
Method for manufacturing a device for controlling the throughflow of a gaseous or liquid medium
Procédé destiné à fabriquer un dispositif de commande du débit d'un milieu gazeux ou liquide

(30) Priorität: 22.12.2006 DE 102006060876
(43) Veröffentlichungstag der Anmeldung: 25.06.2008
(73) Patentinhaber: Gustav Wahler GmbH u. Co.KG, 73730 Esslingen (DE)
(72) Erfinder: Walter, Gerhard, Dipl.-Ing., 72581 Dettingen (DE); Lohr, Marcus, Dipl.-Ing., 73728 Esslingen (DE); Krieger, Björn, 73776 Altbach (DE)
(74) Vertreter: Witte, Weller & Partner

(56) Entgegenhaltungen:
- EP-A- 1 593 887
- WO-A-96/35866
- DE-A1- 10 231 968
- DE-A1- 19 604 009
- JP-A- 7 151 243
- JP-A- 2002 285 863

## Beschreibung

Die Erfindung bezieht sich auf ein Verfahren zum Herstellen einer Vorrichtung zur Steuerung des Durchflusses eines gasförmigen oder flüssigen Mediums, mit den übrigen Merkmalen im Oberbegriff des Anspruchs 1.

Es ist ein Verfahren der eingangs genannten Art bekannt (EP 1 593 887 A1), bei dem die Klappe in ihrer Schließstellung mit ihrem Randbereich zumindest im Wesentlichen mit Linienberührung an zumindest einer Anschlagfläche des Gehäuses anliegt. Diese Schließstellung der Klappe wird durch ein darauf wirkendes Schließmoment erreicht, bei dem die wirkende Kraft unter Berücksichtigung der Festigkeit des Werkstoffes, der die gehäuseseitigen Anschlagflächen bildet, und des Werkstoffes der Klappe auf ihrem Randbereich gewählt ist. Der Randbereich der Klappe ist im Querschnitt zugespitzt oder abgerundet, wobei die zugeordneten gehäuseseitigen Anschlagflächen im Querschnitt die Form von zueinander rechtwinklig gerichteten Ecken haben. Die Anschlagflächen des Gehäuses sind durch Ringhülsen gebildet, die quer zur Längsmittelachse des Gehäuses in Bezug zueinander versetzt sind, um die gehäuseseitigen Anschlagflächen in Richtung radial nach innen freizustellen. Sowohl die Klappe als auch die beiden gehäuseseitigen Hülsen bestehen aus Stahl.

Aus der DE 196 04 009 A1 ist ein etwa rohrförmiger Drosselkörper bekannt, der im Inneren eine schwenkverstellbar gelagerte Klappe aufweist, wobei die Klappe in ihrer Schließstellung in Bezug auf eine Diametralebene des Gehäuses unter einem spitzen Winkel schräg verläuft. Das Gehäuse und die Klappe bestehen aus voneinander unterschiedlichen Metallen. Die Klappe kann an der äußeren Umfangsfläche eine Beschichtung aus Kunststoff aufweisen.

Ein ferner bekanntes Drosselventil (JP 2002 285863) weist eine metallische Klappe auf, die mit Ausnahme des äußeren Randbereichs mit einer Kunststoffschicht überdeckt ist und in ihrer Schließstellung ebenfalls in Bezug auf eine Radialebene geringfügig unter einem spitzen Winkel geneigt steht.

Bei bekannten Verfahren (DE 196 03 547 A1) wird eine aus Kunststoff bestehende Klappe in ihrer Schließstellung mittels zugeführter Energie erwärmt und mit einer Schließkraft derart beaufschlagt, dass die Randbereiche der Klappe, die an gehäusseitigen Anschlagflächen anliegen, plastisch verformt werden und dadurch an die gehäuseseitigen Anschlagflächen angepasst werden. Derartige, aus relativ weichem Kunststoffmaterial bestehende Klappen erfüllen die Anforderungen beim bestimmungsgemäßen Gebrauch der Vorrichtung nicht. Die Lebensdauer solcher Vorrichtungen ist aufgrund dieser Klappen relativ kurz. Da nicht auszuschließen ist, dass Verunreinigungen od. dgl. Partikel im Medium mitgeführt werden, können sich diese mitgeführten Partikel zwischen dem klappenseitigen Randbereich und den Anschlagflächen des Gehäuses in der Schließstellung der Klappe anreichern, in das Material der Klappe einpressen oder in sonstiger Weise den Randbereich der Klappe schädigen bzw. die Anschlagflächen des Gehäuses in Mitleidenschaft ziehen, mit dem Ergebnis, dass relativ schnell eine Undichtheit in der Schließstellung der Klappe auftritt und sich relativ große Leckagen ergeben. Nachteilig ist ferner, dass die Herstellung einer solchen Vorrichtung Schwierigkeiten mit sich bringt; denn beim Erwärmen und Verformen der aus Kunststoff bestehenden Klappe in deren Randbereich muss darauf geachtet werden, dass dieser Randbereich nicht gänzlich wegfließt und dann bereits bei der Herstellung eine nicht brauchbare Klappe das Ergebnis ist. Das beschriebene vorbekannte Verfahren eignet sich daher nicht für die Herstellung solcher Vorrichtungen, insbesondere Ventile, von denen eine große Lebensdauer und Langlebigkeit und zugleich eine äußerst dicht schließende Klappe in der Schließstellung erwartet wird, und dies zuverlässig über eine lange Betriebsdauer.

Bekannt sind Klappenventile mit einseitig angeschlagener Klappe. Diese sind wegen großer Leckagen nachteilig. Andere bekannte Klappenventile weisen einen beidseitigen axialen Anschlag auf. Nachteilig sind bei diesen entweder große Leckagen wegen Bauteil- und Montagetoleranzen oder sehr hohe Herstellungskosten aufgrund hoher erforderlicher Präzision. Bekannt sind ferner Klappenventile mit Kolbenring zur Abdichtung. Nachteilig sind bei diesen große erforderliche Öffnungskräfte zur Überwindung der Reibkraft und hohe Herstellungskosten.

Der Erfindung liegt die Aufgabe zugrunde, ein Verfahren der eingangs genannten Art zu schaffen, das in einfacher, kostengünstiger Weise die Herstellung einer ventilartigen Vorrichtung mit äußerst dicht schließender Klappe auch über eine lange Lebensdauer ermöglicht.

Die Aufgabe ist bei einem Verfahren der eingangs genannten Art gemäß der Erfindung durch die Merkmale im Anspruch 1 gelöst. Weitere besondere Erfindungsmerkmale und Ausgestaltungen dieses Verfahrens ergeben sich aus den dazugehörigen Unteransprüchen. Das Verfahren gemäß der Erfindung ermöglicht bei einfacher und kostengünstiger Verfahrensweise die Herstellung einer Vorrichtung, die beim bestimmungsgemäßen Betrieb dann, wenn sich die Klappe in der Schließstellung befindet, äußerst dicht schließt. Dies ist auch über eine recht lange Lebensdauer der Vorrichtung unverändert gewährleistet. Zwischen der Klappe und dem Gehäuse liegt im Wesentlichen eine Linienberührung vor. Diese hat bei der Gestaltung als Abgasrückführventil den großen Vorteil, dass eine Klebeneigung im Schließzustand durch Abgaskondensate vermieden wird. Die in der Schließstellung der Klappe erreichbare nahezu völlige Dichtheit führt dazu, dass in der Schließstellung keine oder nur äußerst vernachlässigbar kleine Leckagen auftreten. Das Verfahren hat den Vorteil, dass im Fall einer plastischen Verformung des metallischen Gehäuses zumindest im Bereich einer vorzugsweise schrägen Anschlagfläche und/oder der Klappe an deren Randbereich sowohl klappenseitige Toleranzen als auch solche im Bereich der jeweiligen Anschlagfläche des Gehäuses, z. B. auf der Oberfläche, ausgeglichen werden. Vorteilhaft ist ferner, dass eine plastische Verformung des Gehäuses und/oder der Klappe nur ein einziges Mal geschieht und damit die jeweilige Anschlagfläche des Gehäuses und der zugeordnete Randbereich der Klappe und somit die zusammenwirkenden Kontaktflächen aneinander angepasst werden. Die Erfindung ermöglicht somit die Einstellung oder sogar Kalibrierung eines Toleranzausgleichs. Aufgrund dessen bedarf es bei der Herstellung der Klappe und der gehäuseseitigen Anschlagflächen keiner besonders hohen Anforderungen an die Toleranzen, da diese durch die einmalige plastische Verformung des Gehäuses und/oder der Klappe von selbst ausgeglichen werden. Auch dies hat eine Kostensenkung bei der Herstellung des Gehäuses sowie der Klappe zur Folge. Eine nach dem erfindungsgemäßen Verfahren hergestellte Vorrichtung hat ferner den Vorteil, dass je nach Gegebenheiten die beim bestimmungsgemäßen Betrieb zur Herbeiführung und Beibehaltung der Schließstellung der Klappe erforderliche Schließkraft im Vergleich zu herkömmlichen Vorrichtungen reduziert werden kann oder auch bedarfsweise größer als die beim bekannten Ventil gemäß DE 196 03 547 A1 zulässige Schließkraft gewählt werden kann, die bei diesem bekannten Ventil aufgrund des Kunststoffmaterials der Klappe zur Vermeidung von dauerhaften Verformungen dieser nur gering sein kann.

Die Erfindung bezieht sich ferner auf eine Vorrichtung gemäß Anspruch 27, die nach dem Verfahren gemäß der Erfindung hergestellt ist. Weitere, die Vorrichtung betreffende Erfindungsmerkmale und Ausgestaltungen ergeben sich aus den diesbezüglichen, folgenden Ansprüchen.

Weitere Einzelheiten und Vorteile der Erfindung sind in der nachfolgenden Beschreibung erläutert.

Der vollständige Wortlaut der Ansprüche ist vorstehend allein zur Vermeidung unnötiger Wiederholungen nicht wiedergegeben, sondern statt dessen lediglich durch Hinweise auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische perspektivische Ansicht eines Gehäuses einer Vorrichtung zur Steuerung des Durchflusses eines gasförmigen oder flüssigen Mediums, ohne Steuerglied in Form einer Klappe, gemäß einem ersten Ausführungsbeispiel,
- Fig. 2: einen schematischen Schnitt entlang der Linie II-II in Fig. 1,
- Fig. 3: einen schematischen Schnitt etwa entsprechend demjenigen in Fig. 2 in größerem Maßstab und in einer Phase während der Herstellung eines kalibrierten Toleranzausgleichs,
- Fig. 4: einen schematischen Schnitt entsprechend demjenigen in Fig. 3 nach Beendigung des kalibrierten Toleranzausgleichs,
- Fig. 5: einen vergrößerten Ausschnitt entsprechend V in Fig. 4,
- Fig. 6: einen schematischen Schnitt etwa entsprechend demjenigen in Fig. 3 eines Teils einer Vorrichtung gemäß einem zweiten Ausführungsbeispiel in einer Phase während der Einstellung des Toleranzausgleichs,
- Fig. 7: einen schematischen Schnitt etwa entsprechend demjenigen in Fig. 6 nach Beendigung des Toleranzausgleichs.

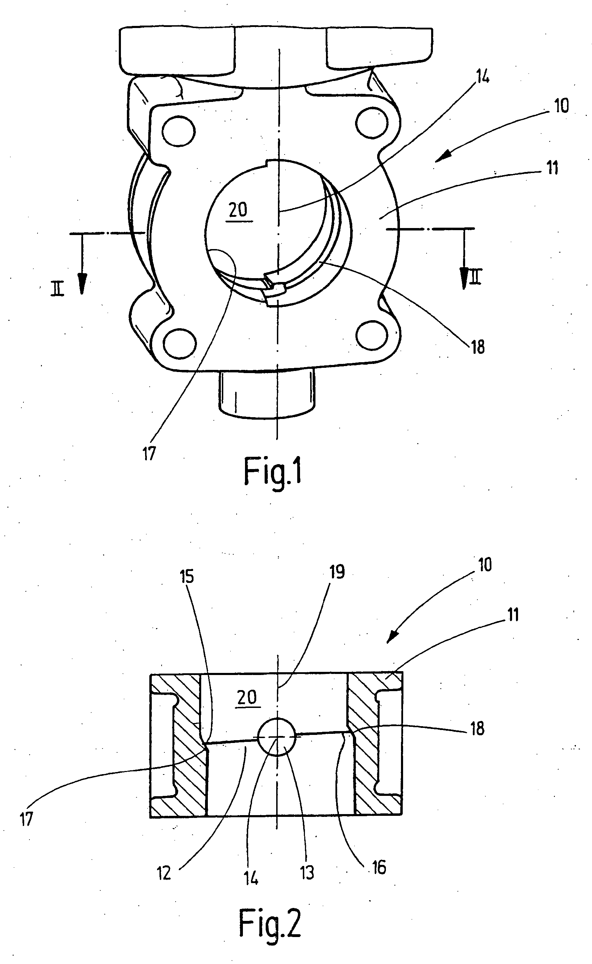

In Fig. 1 bis 5 ist ein erstes Ausführungsbeispiel einer Vorrichtung 10 zur Steuerung des Durchflusses eines gasförmigen oder flüssigen Mediums gezeigt. Bei der Vorrichtung 10 handelt es sich z. B. um ein Abgasrückführventil. Die Vorrichtung 10 weist ein Gehäuse 11 und in diesem ein Ventilverschlussglied auf, das hier als Klappe 12 ausgebildet ist. Die Klappe 12 ist in oder an einer Klappenwelle 13 befestigt und um die Längsachse 14 zwischen einer Offenstellung und einer in Fig. 2 gezeigten Schließstellung schwenkbar gelagert und betätigbar. Die Klappe 12 hat beim gezeigten Ausführungsbeispiel etwa Kreisform, wobei die Umfangskontur der Klappe 12 auch anders gestaltet sein kann. Die Klappe 12 liegt in der Schließstellung gemäß Fig. 2 mit beidseitig der Längsachse 14 vorhandenen Randbereichen 15, 16 an zugeordneten und in Anpassung an die Kontur der Klappe 12 etwa halbkreisförmig verlaufenden Anschlagflächen 17 bzw. 18 des Gehäuses 11 an. Das Gehäuse 11 enthält einen zentralen Durchgang 20 in Form einer Bohrung, der von der Klappe 12 mehr oder weniger geöffnet bzw. geschlossen wird mit entsprechender Steuerung des Durchflusses des hindurchgeleiteten Mediums. Der Durchgang 20 ist im Wesentlichen zylindrisch, wobei dessen Längsmittelachse quer, insbesondere etwa rechtwinklig, zur Längsachse 14 verläuft und deswegen nachfolgend als Querachse 19 bezeichnet ist. Die Anschlagflächen 17, 18 erstrecken sich beiderseits der Querachse 19 und verlaufen um diese etwa halbkreisförmig.

Zur Erzeugung der späteren Dichtheit der Vorrichtung 10 im Betrieb bei in Schließstellung befindlicher Klappe 12 kann ein besonderer kalibrierter Toleranzausgleich zwischen den Randbereichen 15, 16 einerseits und den zugeordneten Anschlagflächen 17, 18 andererseits vorgenommen werden. Die Klappe 12 kann mit einer über der Elastizitätsgrenze liegenden Kraft unter Berücksichtung der Festigkeit des Werkstoffes, der die gehäuseseitigen Anschlagflächen 17, 18 bildet, und des Werkstoffes der Klappe 12 auf ihrem Randbereich 15, 16 derart beaufschlagt werden, dass eine plastische, also bleibende, Verformung des Gehäuses 11 und/oder der Klappe 12 erfolgt. Statt dessen kann die Kraft auch derart gewählt werden, dass die Klappe 12 mit ihrem Randbereich 15, 16 im Wesentlichen mit Linienberührung an zumindest einer Anschlagfläche 17, 18 des Gehäuses 11 anliegt. Wird eine plastische Verformung gemäß dem ersten Ausführungsbeispiel angestrebt, so wird diese Kraft so gewählt, dass das Gehäuse 11 im Bereich zumindest einer der Anschlagflächen 17, 18 und/oder Klappe 12 an ihrem Randbereich 15, 16 bleibend und derart verformt werden, dass die Klappe 12 mit ihrem jeweiligen Randbereich 15, 16 in die zugeordnete, zumindest eine Anschlagfläche 17, 18 einschneidet und/oder der Randbereich 15, 16 der Klappe 12 in Anpassung an mindestens eine Anschlagfläche 17, 18 verformt wird. Beim ersten Ausführungsbeispiel gemäß Fig. 1 bis 5 wird die Kraft, die zur Erzeugung einer Dichtheit in der Schließstellung der Klappe 12 einmalig auf diese ausgeübt wird, in Schwenkrichtung der Klappe 12 um deren Längsachse 14 und damit in Schließrichtung der Klappe 12 ausgeübt. Hierbei kann sich der Randbereich 15 der Klappe 12 bei härterer Materialgestaltung als das Gehäuse 11 in die Anschlagfläche 17 eingraben und der andere Randbereich 16 der Klappe 12 in die zugeordnete andere Anschlagfläche 18. Zusätzlich dazu oder statt dessen kann sich der Randbereich 15, 16 der Klappe 12 verformen. Statt eine plastische Verformung herbeizuführen, kann auch lediglich eine Linienberührung zwischen der Klappe 12 und dem Gehäuse 11 erzeugt werden. Weitere Einzelheiten werden später erläutert.

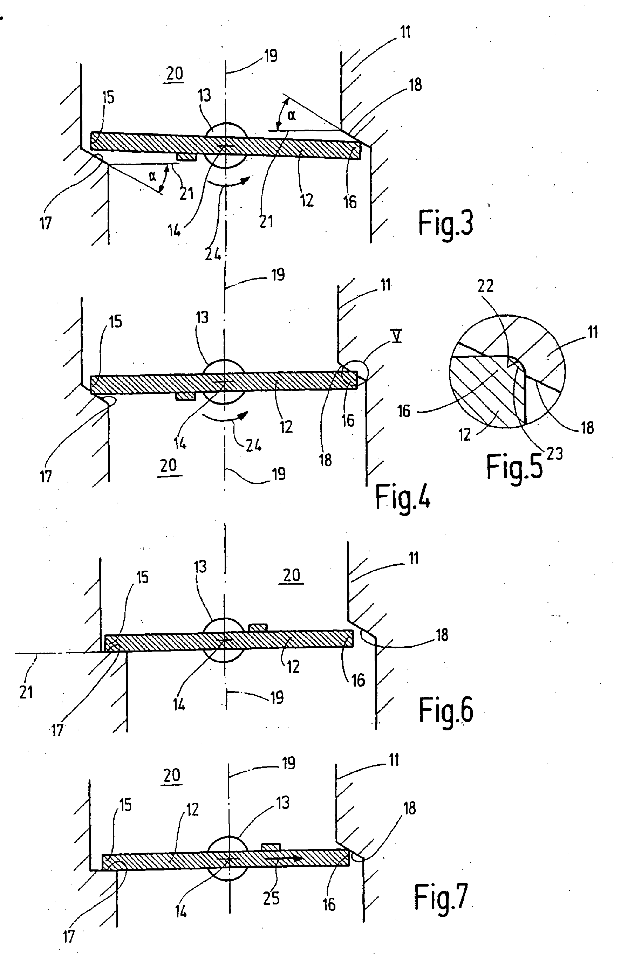

Ersichtlich weist das Gehäuse 11 beiderseits der Längsachse 14 der Klappe 12 vorzugsweise etwa halbkreisförmig verlaufende Anschlagflächen 17, 18 auf, wobei die Besonderheit dieser darin besteht, dass beide Anschlagflächen 17 und 18 in Bezug auf eine Ebene 21, die zur gehäuseseitigen Querachse 19 etwa rechtswinklig und dabei radial verläuft, schräg gerichtet und als jeweilige Schrägfläche ausgebildet sind. Der Schrägungswinkel α der Schrägflächen ist lediglich in Fig. 3 eingezeichnet. Er beträgt etwa zwischen 5° und 35°, wobei dieser vorzugsweise etwa z. B. bei 16,5° liegen kann. Die beidseitige Schräge hat den besonderen Vorteil, dass im Strömungsverlauf des Mediums keine Rezirkulations- und Totwassergebiete auftreten, wodurch weniger Schmutz abgelagert wird. Man erkennt, dass beide Anschlagflächen 17, 18 des Gehäuses 11 in Richtung der gehäuseseitigen Querachse 19. zueinander versetzt sind. In dem endgültigen Zustand nach dem kalibrierten Toleranzausgleich enthält jede Anschlagfläche 17, 18 auf ihrer dem Randbereich 15 bzw. 16 zugewandten Fläche eine im Querschnitt etwa V-förmige Rille 22, die in der Vergrößerung gemäß Fig. 5 zu sehen ist. Die Rille 22 entspricht zumindest im Wesentlichen der Querschnittsform und Querschnittsgröße des in Fig. 5 vergrößert dargestellten Bereichs 23 am zugeordneten Randbereich 16 der Klappe 12.

Sowohl das Gehäuse 11, zumindest die gehäuseseitigen Anschlagflächen 17, 18, die hier mit dem Gehäuse 11 einstückig sind, stattdessen aber auch durch separate Einlegeteile gebildet sein können, als auch die Klappe 12, zumindest deren Randbereich 15 und 16, der ebenfalls beim gezeigten Ausführungsbeispiel mit dem übrigen Teil der Klappe 12 einstückig ist, stattdessen aber auch durch einen besonderen Ringteil gebildet sein kann, sind aus metallischem Werkstoff gebildet. Dabei sind z. B. die gehäuseseitigen Anschlagflächen 17, 18 aus einem Metallwerkstoff gebildet, der eine geringere Festigkeit hat als der Metallwerkstoff, aus dem die Klappe 12, zumindest deren Randbereich 15, 16, gebildet ist. Die Verhältnisse können auch umgekehrt sein. Der Metallwerkstoff der Klappe 12 kann dabei etwa die zweifache Festigkeit des Metallwerkstoffs der gehäuseseitigen Anschlagflächen 17, 18 aufweisen. So kann die Festigkeit des Metallwerkstoffs der Klappe 12, zumindest ihres Randbereichs 15, 16, etwa zwischen 450 N/mm² und 750 N/mm², vorzugsweise etwa 700 N/mm², betragen. Die Festigkeit des Metallwerkstoffes des Gehäuses 11, zumindest der gehäuseseitigen Anschlagflächen 17, 18, kann so gewählt werden, dass diese etwa zwischen 200 N/mm² und 400 N/mm², vorzugsweise z. B. 350 N/mm², beträgt. Die Festigkeitsverhältnisse von Klappe 12 und Gehäuse 11 können auch umgekehrt sein.

Das Gehäuse 11, zumindest deren Anschlagflächen 17, 18, sind z. B. aus einem Leichtmetallwerkstoff gebildet, z. B. aus Aluminium, einer AlSiMg-Legierung od. dgl. Auch Guss, z. B. Grauguss kommt, in Betracht. Die Klappe 12 mit im Vergleich zu den Anschlagflächen 17, 18 erheblich größerer Festigkeit ist zumindest auf ihrem Randbereich 15, 16 aus Stahl, z. B. Edelstahl, gebildet.

Eine Vorrichtung 10 beschriebener Art gemäß dem ersten Ausführungsbeispiel wird nach folgendem Verfahren hergestellt. Zunächst wird die Klappe 12 relativ zur Klappenwelle 13 grob zentriert und dann mit der Klappenwelle 13 fest verbunden. Etwa dieser Zustand ist in Fig. 3 dargestellt. Sodann wird die Klappe 12 mit Hilfe entsprechender Mittel um die Längsachse 14 zunächst soweit geschwenkt, dass diese mit dem jeweiligen Randbereich 15, 16 an der zugeordneten Anschlagfläche 17, 18 anliegt. Aus Fig. 3 bis 5 ist ersichtlich, dass der Randbereich 15, 16 einen endseitigen Bereich, wie den Bereich 23, aufweisen kann, der als spitze Kante gestaltet ist und dadurch etwa mit Linienberührung an der zugeordneten Anschlagfläche 17, 18 anliegt. Dies kann unter Umständen als Justierung ausreichen. Es kann aber auch auf die Klappe in Schwenkrichtung dieser um die Längsachse 14 für die Erzeugung einer Dichtheit beim späteren Betrieb in der Schließstellung eine zusätzliche Kraft ausgeübt werden. Die Ausübung dieser Kraft in Schwenkrichtung kann mittels nicht gezeigter Pressglieder erfolgen, die auf die jeweiligen Klappenhälften zur Schwenkbeaufschlagung in Pfeilrichtung 24 einwirken. Dabei kann die Klappe 12 in ihrem Randbereich 15, 16, der der jeweiligen schrägen Anschlagfläche 17, 18 zugeordnet ist, mit einer scharfen Kante in die Schrägfläche derart einschneiden, dass in dieser eine im Querschnitt zumindest im Wesentlichen V-förmige Rille 22 eingeschnitten wird. Dabei kann es von Vorteil sein, zumindest ist es nicht auszuschließen, dass die scharfe Kante beim einmaligen Einschneiden in die schräge Anschlagfläche 17, 18 zumindest geringfügig plastisch verformt wird in Anpassung an die Querschnittsform und die Querschnittsabmessung der eingeschnittenen Rille 22. Auch kann statt dessen oder zusätzlich dazu eine plastische Verformung der Klappe 12 erfolgen.Die in Schwenkrichtung der Klappe 12 gemäß Pfeil 24 ausgeübte Kraft kann statt mittels Pressgliedern auch durch Aufbringen eines Drehmoments an der Klappenwelle 13 erzeugt werden. Durch dieses Verfahren ergibt sich der Vorteil, dass durch plastische Verformung der gehäuseseitigen Anschlagflächen 17, 18 und/oder des Randbereichs 15, 16 sowohl die Toleranzen der Klappe 12 als auch z. B. gewisse Ungenauigkeiten, z. B. Unebenheiten, in der Oberfläche der schrägen Anschlagflächen 17, 18 des Gehäuses 11 ausgeglichen werden, so dass auf sehr einfache Weise - obwohl die Klappe 12 und das Gehäuse 11 aus einem Metallwerkstoff bestehen - im späteren Betrieb der Vorrichtung 10 eine zuverlässig dichte Schließstellung der Klappe 12 gewährleistet ist, in der keine oder nur vernachlässigbar kleine Leckagen vorhanden sind. Die plastische Verformung des Gehäuses 11, zumindest der Anschlagflächen 17, 18 dieses, und/oder der Klappe 12 hat auch den Vorteil, dass diese bei der Herstellung nur ein einziges Mal erfolgt und damit die Anschlagflächen 17, 18 und der Randbereich 15, 16 der Klappe sehr genau aneinander angepasst sind, so dass später beim bestimmungsgemäßen Gebrauch keine zusätzlichen Kräfte zur Gewährleistung der Dichtheit der Klappe 12 in der Schließstellung aufgebracht werden müssten. Bei der Herstellung des Gehäuses 11 sowie der Klappe 12 sind keine hohen Anforderungen an die Toleranzen zu stellen, weil diese durch die einmalige plastische Verformung des Gehäuses 11 im Bereich der Anschlagflächen 17, 18 und/oder der Klappe 12 automatisch ausgeglichen werden. Dadurch verringern sich die Kosten für die Herstellung der Klappe 12 und des Gehäuses 11 erheblich.

Bei dem in Fig. 6 und 7 gezeigten zweiten Ausführungsbeispiel ist das Gehäuse 11 derart gestaltet, dass nur eine der beiden Anschlagflächen des Gehäuses 11, in Fig. 6 und 7 die dort rechts befindliche Anschlagfläche 18, schräg gerichtet ist und als Schrägfläche ausgebildet ist, wie dies beim ersten Ausführungsbeispiel für beide Anschlagflächen 17, 18 der Fall ist. Die andere gehäuseseitige Anschlagfläche 17 hingegen ist geradlinig, also flacheben, gestaltet und verläuft etwa innerhalb der Ebene 21, die zur gehäuseseitigen Querachse 19 etwa rechtwinklig gerichtet ist und radial verläuft. Hierbei erzeugt man einen Toleranzausgleich auf folgende Weise. Die Klappe 12 wird zunächst etwa entsprechend Fig. 6 mit einer auf die dort links befindliche Klappenhälfte wirkenden, definierten Schließkraft beaufschlagt und mit dem Randbereich 15 auf die diesem zugeordnete geradlinig verlaufende Anschlagfläche 17 des Gehäuses 11 angepresst. Dann wird während der Wirkung dieser Anpresskraft die Klappe mittels einer den Toleranzausgleich erzeugenden horizontal wirkenden Kraft in geradliniger Richtung in Fig. 6 und 7 nach rechts gegen die andere, schräg gerichtete und als Schrägfläche ausgebildete Anschlagfläche 18 gepresst, so dass eine Linienberührung erreicht wird. Im Anschluss daran wird die Klappe 12 auf oder in der Klappenwelle 13 fixiert, wobei dies durch Schweißen, insbesondere Laserschweißen, erfolgen kann. Die Kraft, die zur Erzeugung einer Dichtheit der Klappe 12 in der Schießstellung einmalig auf diese ausgeübt wird, wirkt somit im Wesentlichen in horizontaler, radialer Richtung gemäß Pfeil 25, wobei diese Kraft während der Anpressung der in Fig. 6 und 7 linken Klappenhälfte mit dem Randbereich 15 die zugeordnete Anschlagfläche 17 wirksam ist. Bei dieser geradlinigen Verschiebung der Klappe 12 wird die Klappe 12 mit ihrem Randbereich 16, der scharfkantig sein kann, auf die zugeordnete Anschlagfläche 18, die schräg gerichtet und als Schrägfläche ausgebildet ist, geschoben. Je nach Höhe dieser dies bewirkenden radialen Kraft erfolgt entweder nur ein Anpressen des scharfkantigen Randbereichs 16 an die Anschlagfläche 18 oder statt dessen, wie beim ersten Ausführungsbeispiel, ein Einschneiden unter plastischer Verformung der Anschlagfläche 18.

## Patentansprüche

1. Verfahren zum Herstellen einer Vorrichtung (10) zur Steuerung des Durchflusses eines gasförmigen oder flüssigen Mediums, mit einem Gehäuse (11) und mit einer in dem Gehäuse (11) zwischen einer Schließstellung und einer Offenstellung um eine Längsachse (14) schwenkbar gelagerten Klappe (12), die in ihrer Schließstellung mit ihrem Randbereich (15, 16) an beiderseits der Längsachse (14) vorhandenen, vorzugsweise etwa halbkreisförmig verlaufenden, Anschlagflächen (17, 18) des Gehäuses (11) anliegt, wobei zur Erzeugung einer Dichtheit in der Schließstellung die Klappe (12) mit einer Kraft beaufschlagt wird, die unter Berücksichtigung der Festigkeit des die gehäuseseitigen Anschlagflächen (17, 18) bildenden Werkstoffes und des Werkstoffes der Klappe (12) auf ihrem Randbereich (15, 16) derart gewählt ist, dass die Klappe (12) mit ihrem Randbereich (15, 16) zumindest im Wesentlichen mit Linienberührung an zumindest einer Anschlagfläche (17, 18) des Gehäuses (11) anliegt,
**dadurch gekennzeichnet,**
**dass** zumindest eine gehäuseseitige Anschlagfläche (17, 18) in Bezug auf eine zu einer gehäuseseitigen Querachse (19) etwa rechtwinklig verlaufende radiale Ebene (21) schräg gerichtet und als Schrägfläche ausgebildet ist, an der die Klappe (12) in ihrer Schließstellung mit einem zugeordneten Randbereich (15, 16) zumindest im Wesentlichen mit Linienberührung anliegt, und dass sowohl das Gehäuse (11), zumindest die gehäuseseitigen Anschlagflächen (17, 18), als auch die Klappe (12), zumindest deren Randbereich (15, 16), aus metallischem Werkstoff gebildet werden und dass die Kraft derart gewählt ist, dass das Gehäuse (11) im Bereich zumindest einer Anschlagfläche (17, 18) und/oder die Klappe (12) an ihrem Randbereich (15, 16) einmalig plastisch bleibend und derart verformt werden, dass die Klappe (12) mit ihrem Randbereich (15, 16) in die zumindest eine Anschlagfläche (17, 18) einschneidet und/oder der Randbereich (15, 16) der Klappe (12) in Anpassung an mindestens eine Anschlagfläche (17, 18) verformt wird.

2. Verfahren nach Anspruch 1,
**dadurch gekennzeichnet,**
**dass** der Schrägungswinkel der Schrägfläche in Bezug auf die radiale Ebene (21) etwa zwischen 5° und 35° gewählt wird, vorzugsweise z. B. etwa 16,5° beträgt.

3. Verfahren nach einem der Ansprüche 1 oder 2,
**dadurch gekennzeichnet,**
**dass** beide Anschlagflächen (17, 18) des Gehäuses (11) schräg gerichtet sind und als Schrägflächen ausgebildet sind, wobei der Schrägungswinkel bei beiden vorzugsweise gleich groß ist.

4. Verfahren nach einem der Ansprüche 1 oder 2,
**dadurch gekennzeichnet,**
**dass** eine Anschlagfläche (18) des Gehäuses (11) schräg gerichtet und als Schrägfläche ausgebildet ist und dass die andere Anschlagfläche (17) geradlinig und etwa innerhalb einer zur gehäuseseitigen Querachse (19) etwa rechtwinklig gerichteten radialen Ebene (21) verläuft.

5. Verfahren nach einem der Ansprüche 1 bis 4,
**dadurch gekennzeichnet,**
**dass** die beiden Anschlagflächen (17, 18) des Gehäuses (11) in Richtung der gehäuseseitigen Querachse (19) zueinander versetzt sind.

6. Verfahren nach einem der Ansprüche 1 bis 5,
**dadurch gekennzeichnet,**
**dass** die Kraft größer bemessen ist, als die für die Dichtheit in der Schließstellung erforderliche Schließkraft der Klappe (12).

7. Verfahren nach Anspruch 1,
**dadurch gekennzeichnet,**
**dass** die Festigkeit des einen Metallwerkstoffes, z. B. der Klappe (12), größer ist als diejenige des anderen Metallwerkstoffes, z. B. des Gehäuses (11), oder umgekehrt.

8. Verfahren nach Anspruch 7,
**dadurch gekennzeichnet,**
**dass** der eine Metallwerkstoff, z. B. derjenige des Randbereichs (15, 16) der Klappe (12), etwa die zweifache Festigkeit des anderen Metallwerkstoffes, z. B. der gehäuseseitigen Anschlagflächen (17, 18), aufweist, oder umgekehrt.

9. Verfahren nach einem der Ansprüche 1 bis 8,
**dadurch gekennzeichnet,**
**dass** die Festigkeit des Metallwerkstoffes der Klappe (12), zumindest ihres Randbereichs (15, 16), etwa zwischen 450 N/mm² und 750 N/mm², vorzugsweise z. B. etwa 700 N/mm², beträgt.

10. Verfahren nach einem der Ansprüche 1 bis 9,
**dadurch gekennzeichnet,**
**dass** die Festigkeit des Metallwerkstoffes des Gehäuses (11), zumindest der gehäuseseitigen Anschlagflächen (17, 18), etwa zwischen 200 N/mm² und 400 N/mm², vorzugsweise z. B. etwa 350 N/mm², beträgt.

11. Verfahren nach Anspruch 1 bis 10,
**dadurch gekennzeichnet,**
**dass** das Gehäuse (11), zumindest die gehäuseseitigen Anschlagflächen (17, 18), aus einem Leichtmetallwerkstoff, z. B. aus Aluminium oder einer AlSiMg-Legierung od. dgl, oder aus einem Gussteil, z. B. aus Grauguss, od. dgl. gebildet ist.

12. Verfahren nach Anspruch 1 bis 11,
**dadurch gekennzeichnet,**
**dass** die Klappe (12), zumindest deren Randbereich (15, 16), aus Stahl, z. B. Edelstahl, gebildet wird.

13. Verfahren nach einem der Ansprüche 1 bis 12,
**dadurch gekennzeichnet,**
**dass** mittels der Klappe (12) in zumindest eine Anschlagfläche (17, 18), insbesondere Schrägfläche, einmalig und bleibend eine im Querschnitt etwa V-förmige Rille (22) eingeschnitten wird.

14. Verfahren nach Anspruch 12,
**dadurch gekennzeichnet,**
**dass** die Klappe (12) an ihrem Randbereich (15, 16), der der mindestens einen Anschlagfläche (17, 18), insbesondere Schrägfläche, zugeordnet ist, mit einer scharfen Kante in die Schrägfläche einschneidet.

15. Verfahren nach Anspruch 14,
**dadurch gekennzeichnet,**
**dass** die scharfe Kante beim einmaligen Einschneiden in die Anschlagfläche (17, 18) zumindest geringfügig plastisch verformt wird in Anpassung an die Querschnittsform und Querschnittsabmessung der eingeschnittenen Rille (22).

16. Verfahren nach einem der Ansprüche 1 bis 15,
**dadurch gekennzeichnet,**
**dass** die Kraft, die zur Erzeugung einer Dichtheit in der Schließstellung der Klappe (12) einmalig auf diese ausgeübt wird, in Schwenkrichtung der Klappe (12) um deren Längsachse (14) und damit in Schließrichtung der Klappe (12) ausgeübt wird.

17. Verfahren nach einem der Ansprüche 4 bis 16,
**dadurch gekennzeichnet,**
**dass** die Kraft, die zur Erzeugung einer Dichtheit in der Schließstellung der Klappe (12) einmalig auf diese ausgeübt wird, in radialer Richtung und derart auf die Klappe (12) ausgeübt wird, dass diese auf der geradlinig verlaufenden Anschlagfläche (17) des Gehäuses (11) in Richtung auf die andere, schräg gerichtete und als Schrägfläche ausgebildete Anschlagfläche (18) geschoben wird und mit ihrem dieser Anschlagfläche (18) zugeordneten Randbereich (16) an der Schrägfläche anschlägt, vorzugsweise in diese Schrägfläche einschneidet.

18. Verfahren nach einem der Ansprüche 1 bis 17,
**dadurch gekennzeichnet,**
**dass** die Klappe (12) vor der Kraftbeaufschlagung zur Erzeugung einer Dichtheit in der Schließstellung relativ zu einer Klappenwelle (13) grob zentriert und dann mit der Klappenwelle (13) fest verbunden wird.

19. Verfahren nach einem der Ansprüche 16 bis 18,
**dadurch gekennzeichnet,**
**dass** die in Schwenkrichtung der Klappe (12) ausgeübte Kraft mittels Pressgliedern erzeugt wird, die auf die Klappenhälften einwirken.

20. Verfahren nach einem der Ansprüche 16 bis 18,
**dadurch gekennzeichnet,**
**dass** die in Schwenkrichtung der Klappe (12) ausgeübte Kraft durch Aufbringen eines Drehmoments an der Klappenwelle (13) erzeugt wird.

21. Verfahren nach Anspruch 4 oder 17,
**dadurch gekennzeichnet,**
**dass** die Klappe (12) vor der Kraftbeaufschlagung zur Erzeugung einer Dichtheit in der Schließstellung mit einer auf eine Klappenhälfte wirkenden definierten Schließkraft beaufschlagt und unter der Schließkraft mit einem zugeordneten Randbereich (15) auf die eine, zugeordnete geradlinig verlaufende Anschlagfläche (17) des Gehäuses (11) angepresst wird und dass dann während der Wirkung der Anpresskraft die Klappe (12) mittels der Kraft in geradliniger Richtung gegen die andere, schräg gerichtete und als Schrägfläche ausgebildete Anschlagfläche (18) gepresst wird.

22. Verfahren nach Anspruch 21,
**dadurch gekennzeichnet,**
**dass** die Ausübung der Anpresskraft und der Kraft vor der Fixierung der Klappe (12) auf einer oder in einer Klappenwelle (13) erfolgt

23. Verfahren nach Anspruch 22,
**dadurch gekennzeichnet,**
**dass** die Klappe (12) nach Ausübung der Anpresskraft und der Kraft mit der Klappenwelle (13) fest verbunden wird, z. B. durch Schweißen, insbesondere Laserschweißen.

24. Vorrichtung zur Steuerung des Durchflusses eines gasförmigen oder flüssigen Mediums,
**dadurch gekennzeichnet,**
**dass** diese Vorrichtung (10) nach dem Verfahren nach einem oder mehreren der vorangehenden Ansprüche hergestellt ist.

25. Vorrichtung nach Anspruch 24,
**dadurch gekennzeichnet,**
**dass** das Gehäuse (11) beiderseits der Längsachse (14) der Klappe (12) vorzugsweise etwa halbkreisförmig verlaufende Anschlagflächen (17, 18) aufweist, von denen zumindest eine (18) in Bezug auf eine zur gehäuseseitigen Querachse (19) etwa rechtwinklig verlaufende, radiale Ebene (21) schräg gerichtet und als Schrägfläche ausgebildet ist.

26. Vorrichtung nach Anspruch 24 oder 25,
**dadurch gekennzeichnet,**
**dass** der Schrägungswinkel der Schrägfläche in Bezug auf die radiale Ebene etwa zwischen 5° und 35° beträgt, vorzugsweise etwa 16,5° beträgt.

27. Vorrichtung nach einem der Ansprüche 24 bis 26,
**dadurch gekennzeichnet,**
**dass** beide Anschlagflächen (17, 18) schräg gerichtet und als Schrägflächen ausgebildet sind.

28. Vorrichtung nach einem der Ansprüche 24 bis 27,
**dadurch gekennzeichnet,**
**dass** beide Anschlagflächen (17, 18) des Gehäuses (11) in Richtung der gehäuseseitigen Querachse (19) zueinander versetzt sind.

29. Vorrichtung nach einem der Ansprüche 24 bis 28,
**dadurch gekennzeichnet,**
**dass** zumindest eine Schrägfläche (17, 18) eine im Querschnitt etwa V-förmige Rille (22) enthält, die der Querschnittsform und Querschnittsgröße am zugeordneten Randbereich (15, 16) der Klappe (12) entspricht.

30. Vorrichtung nach einem der Ansprüche 24 bis 29,
**dadurch gekennzeichnet,**
**dass** sowohl das Gehäuse (11), zumindest die gehäuseseitigen Anschlagflächen (17, 18), als auch die Klappe (12), zumindest deren Randbereich (15, 16), aus metallischem Werkstoff gebildet sind.

31. Vorrichtung nach einem der Ansprüche 24 bis 30,
**dadurch gekennzeichnet,**
**dass** die Festigkeit des einen Metallwerkstoffes, z. B. der Klappe (12), größer ist als diejenige des anderen Metallwerkstoffes, z. B. des Gehäuses (11), oder umgekehrt.

32. Vorrichtung nach einem der Ansprüche 24 bis 31,
**dadurch gekennzeichnet,**
**dass** der eine Metallwerkstoff, z. B. derjenige des Randbereichs (15, 16) der Klappe (12), etwa die zweifache Festigkeit des anderen Metallwerkstoffes, z. B. der gehäuseseitigen Anschlagflächen (17, 18), aufweist, oder umgekehrt.

33. Vorrichtung nach einem der Ansprüche 30 bis 32,
**dadurch gekennzeichnet,**
**dass** die Festigkeit des Metallwerkstoffs der Klappe (12), zumindest ihres Randbereichs (15, 16), etwa zwischen 450 N/mm² und 750 N/mm², vorzugsweise z. B. etwa 700 N/mm², beträgt.

34. Vorrichtung nach einem der Ansprüche 30 bis 32,
**dadurch gekennzeichnet,**
**dass** die Festigkeit des Metallwerkstoffes des Gehäuses (11), zumindest der gehäuseseitigen Anschlagflächen (17, 18), etwa zwischen 200 N/mm² und 400 N/mm² vorzugsweise z. B. 350 N/mm², beträgt.

35. Vorrichtung nach einem der Ansprüche 24 bis 34,
**dadurch gekennzeichnet,**
**dass** das Gehäuse (11), zumindest die gehäuseseitigen Anschlagflächen (17, 18), aus einem Leichtmetallwerkstoff, z. B. aus Aluminium oder einer AlSiMg-Legierung, oder aus einem Gussteil, z. B. aus Grauguss, od. dgl. gebildet ist.

36. Vorrichtung nach einem der Ansprüche 24 bis 35,
**dadurch gekennzeichnet,**
**dass** die Klappe (12), zumindest deren Randbereich (15, 16), aus Stahl. z. B. Edelstahl, gebildet ist.

## Claims

1. Process for manufacturing a device (10) for controlling the flow of a gaseous or liquid medium, comprising a housing (11) and a hinged lid (12) being received pivotably about a longitudinal axis (14) within the housing (11) between a closed position and an open position, the hinged lid, when being in its closed position, resting with its rim region (15, 16) against stop surfaces (17, 18) of the housing being arranged on both sides of the longitudinal axis extending preferably roughly semi-circular, wherein for obtaining tightness in the closed position the hinged lid (12) is prestressed with a force that while taking into the account the strength of the material forming the stop surfaces (17, 18) on the housing side, and also of the material of the hinged lid (12) is selected such at its rim region (15, 16) that the hinged lid (12) with its rim region (15, 16) rests against a stop surface (17, 18) of the housing (11) at least substantially with line contact,
**characterized in that**
at least one stop surface (17, 18) on the housing side is oriented slanted with respect to a radial surface (21) extending substantially perpendicular to a lateral axis (19) on the housing side and is configured as a slanted surface, against which the hinged lid (12) rests, when being in the closed position, with an assigned rim region (15, 16) being at least substantially in line contact, and **in that** the housing (11), as well as the stop surfaces (17, 18) on the housing side, as well as the hinged lid (12) are made of a metallic material at least at the rim region (15, 16), and **in that** the force is selected such, that the housing (11) at least in the region of one stop surface (17, 18) and/or of the hinged lid (12) is deformed plastically lasting such that the hinged lid (12) with is rim region (15, 16) cuts into the stop sur-face (17, 18) and/or that the rim region (15, 16) of the hinged lid (12) is deformed substantially mated to a stop surface (17, 18).

2. The method of claim 1,
**characterized in that**
the slant angle of the slanted surface is selected with respect to the radial plane (21) roughly between 5° and 35°, preferably, e.g., about 16.5°.

3. The method of any of claims 1 or 2,
**characterized in that**
both stop surfaces (17, 18) of the housing (11) extend slanted and are configured as slanted surfaces, wherein the slant angle of both surfaces is preferably the same.

4. The method of any of claims 1 or 2,
**characterized in that**
one stop surface (18) of the housing extends slanted and is configured as a slanted surface, and **in that** the other stop surface (17) extends straight and roughly within a radial plane (11) roughly perpendicular to a lateral axis (19) on the housing side.

5. The method of any of claims 1 to 4,
**characterized in that**
the two stop surfaces (17, 18) of the housing (11) are offset with respect to one another towards the lateral axis (19) on the housing side.

6. The method of any of claims 1 to 5,
**characterized in that**
the force is larger than the closing force of the hinged lid (12) necessary for the tightness within the closed position.

7. The method of claim 1,
**characterized in that**
the strength of a metallic material, e.g. of the hinged lid (12) is larger than the strength of the other metallic material, e.g. of the housing (11), or vice versa.

8. The method of claim 7,
**characterized in that**
one of the metallic materials, e.g. the one of the rim regions (15, 16) of the hinged lid (12) has a two-fold strength of the other metallic material, e.g. of the stop surfaces (17, 18) on the housing side, or vice versa.

9. The method of any of claims 1 to 8,
**characterized in that**
the strength of the metallic material of the hinged lid (12), at least within the rim region (15, 16) is between about 450 N/mm² and 750 N/mm², preferably about 700 N/mm².

10. The method of any of claims 1 to 9,
**characterized in that**
the strength of the metallic material of the housing (11), at least of the stop surfaces (17, 18) on the housing side is about between 200 N/mm² and 400 N/mm², preferably about 350 N/mm².

11. The method of any of claims 1 to 10,
**characterized in that**
the housing (11), further at least the stop surfaces (17, 18) on the housing side, are formed of a light metallic material, such as of aluminum or a AlSiMg alloy or the like, or from a cast part, e.g. of a cast ion or the like.

12. The method of any of claims 1 to 11,
**characterized in that**
the hinged lid (12), at least at its rim region (15, 16) is made of steel, e.g. of stainless steel.

13. The method of any of claims 1 to 12,
**characterized in that**
by means of the hinged lid (12) a groove (22) of a roughly V-shaped cross section is cut once and lasting into one stop surface (17, 18), in particular into a slanted surface.

14. The method of claim 12,
**characterized in that**
the hinged lid (12) at its rim region (15, 16) being assigned to the at least one stop surface (17, 18), in particular slanted surface, with a sharp rim cuts into the slanted surface.

15. The method of claim 14,
**characterized in that**
during the one time cut into the stop surface (17, 18) the sharp rim is at least a little plastically deformed mating to the cross sectional shape and to the cross sectional dimension of the cut groove (22).

16. The method of any of claims 1 to 15,
**characterized in that**
the force that is exerted for obtaining tightness within the closed position of the hinged lid (12) once, if exerted within the pivot direction of the hinged lid (12) about its longitudinal axis (14) and thus within the closing direction of the hinged lid (12).

17. The method of any of claims 4 to 16,
**characterized in that**
the force that is exerted once thereon for obtaining a tightness within the closed position of the hinged lid (12) is exerted in radial direction and in such a manner on the hinged lid (12) that the latter is slid along the straight extending stop surface (17, 18) of the housing (11) into the direction of the other slanted and being configured as slanted surface of the stop surface (18), and rests with its rim region (16) assigned to this stop surface (18) against the slanted surface, preferably cuts into this slanted surface.

18. The method of any of claims 1 to 17,
**characterized in that**
the hinged lid (12) is roughly assembled, before exerting force for obtaining a tightness in the closed position relative to the hinged lid shaft (13), and thereafter is fixedly connected to the hinged lid shaft (13).

19. The method of any of claims 16 to 18,
**characterized in that**
the force exerted by means of pressing elements within the pivot direction of the hinged lid (12) exerts onto the hinged lid halves.

20. The method of any of claims 16 to 18,
**characterized in that**
the force exerted in the pivot direction of the hinged lid (12) is generated by applying a rotary moment on the hinged lid shaft (13).

21. The method of any of claims 4 or 17,
**characterized in that**
the hinged lid (12) before exerting force for obtaining tightness within the closed position, is exerted with a defined closing force acting on one of the hinged lid half and is pressed, when being under the closing force, with an assigned stop surface (17) of the housing (11) extending straight, and **in that** during the effecting of the pressing force of the hinged lid (12) by means of the force in straight direction is pressed against the other stop surface (18) extending slanted and being configured as a slanted surface.

22. The method of claim 21,
**characterized in that**
the exertion of the pressing force and of the force before the fixation of the hinged lid (12) is made on one or in another hinged lid shaft (13).

23. The method of claim 22,
**characterized in that**
the hinged lid (12) after exerting the pressing force and the force is fixedly connected to the hinged lid shaft (13), e.g. by welding, in particular by laser welding.

24. A device for controlling flow of a gaseous or liquid medium,
**characterized in that**
this device (10) is made by a method according to one or more of the proceeding claims.

25. The device of claim 24,
**characterized in that**
the housing (11) comprises stop surfaces (17, 18) on both sides of the longitudinal axis (14) of the hinged lid (12), extending preferably about semi-circular, wherein at least one (18) of the stop surfaces with respect to a radial plane (21) extending about perpendicularly to a lateral axis (19) on the housing side extends slanted and is considered as a slanted surface.

26. The device of claim 24 or 25,
**characterized in that**
the slant angle of the slanted surface with respect to the radial plane is about between 5° and 35°, preferably about 16.5°.

27. The device of any of claims 24 to 26,
**characterized in that**
both stop surfaces (17, 18) extend slanted and are configured as slanted surfaces.

28. The device of any of claims 24 to 27,
**characterized in that**
both stop surfaces (17, 18) of the housing (11) are offset with respect to one another in the direction of the lateral axis (19) on the housing side.

29. The device of any of claims 24 to 28,
**characterized in that**
at least one slanted surface (17, 18) comprises a groove (22) being roughly V-shaped in cross section and mating in its cross sectional shape and cross sectional dimension to the assigned rim region (15, 16) of the hinged lid (12).

30. The device of any of claims 24 to 29,
**characterized in that**
the housing (11), as well as the stop surfaces (17, 18) on the housing side, as well as the hinged lid (12) are made of a metallic material, at least at its rim region (15, 16).

31. The device of any of claims 24 to 30,
**characterized in that**
the strength of a metallic material, e.g. of the hinged lid (12), is larger than the respective strength of the other metallic material, e.g. of the housing (11), or vice versa.

32. The device of any of claims 24 to 31,
**characterized in that**
the one metallic material, e.g. the one of the rim regions (15, 16) of the hinged lid (12) has about the two-fold strength of the other metallic material, e.g. of the stop surfaces (17, 18) on the housing side, or vice versa.

33. The device of any of claims 30 to 32,
**characterized in that**
the strength of the metallic material of the hinged lid (12), at least on its rim region (15, 16) is about between 450 N/mm² and 750 N/mm², preferably about 700 N/mm².

34. The device of any of claims 30 to 32,
**characterized in that**
the strength of the metallic material of the housing (11), at least of the stop surfaces (17, 18) on the housing side is between about 200 N/mm,² and 400 N/mm², preferably about 350 N/mm².

35. The device of any of claims 24 to 34,
**characterized in that**
the housing (11), at least the stop surfaces (17, 18) on the housing side are made of a light metallic material, e.g. of aluminum or of a AlSiMg alloy, or of a cast part, e.g. of cast ion, or the like.

36. The device of any of claims 24 to 35,
**characterized in that**
the hinged lid (12), at least on its rim region (15, 16) is made of steel, in particular of stainless steel.

## Revendications

1. Procédé de fabrication d'un dispositif (10) destiné à contrôler le débit d'un fluide gazeux ou liquide, le dispositif présentant :
un boîtier (11) et un clapet (12) qui est monté dans le boîtier (11) de manière à pouvoir pivoter autour d'un axe longitudinal (14) entre une position de fermeture et une position d'ouverture et qui dans sa position de fermeture repose par sa bordure (15, 16) sur des surfaces de butée (17, 18) du boîtier (11) qui sont prévues sur le boîtier (11) des deux côtés de l'axe longitudinal (14) et qui s'étendent de préférence en demi-cercle,
tandis que pour assurer l'étanchéité dans la position de fermeture, le clapet (12) est sollicité par une force sélectionnée en tenant compte de la résistance mécanique du matériau qui forme les surfaces de butée (17, 18) du boîtier et celle du matériau de la bordure (15, 16) du clapet (12) de telle sorte que la bordure (15, 16) du clapet (12) repose sur au moins une surface de butée (17, 18) du boîtier (11) essentiellement par un contact linéaire, **caractérisé en ce que**
au moins une surface de butée (17, 18) du boîtier est orientée obliquement par rapport à un plan radial (21) qui s'étend sensiblement à angle droit par rapport à un axe transversal (19) du boîtier et est configurée comme surface oblique sur laquelle le clapet (12) repose en position de fermeture essentiellement par un contact linéaire avec une bordure (15, 16) associée et
**en ce que** tant le boîtier (11) et au moins ses surfaces de butée (17, 18) que le clapet (12) et au moins sa bordure (15, 16) sont formés d'un matériau métallique,
**en ce que** la force est sélectionnée de telle sorte qu'au moins une surface de butée (17, 18) du boîtier (11) et/ou la bordure (15, 16) du clapet (12) soient déformés plastiquement une fois de manière permanente de telle sorte que la bordure (15, 16) du clapet (12) pénètre dans la ou les surfaces de butée (17, 18) et/ou que la bordure (15, 16) du clapet (12) soit déformée de manière à s'adapter à au moins une surface de butée (17, 18).

2. Procédé selon la revendication 1, **caractérisé en ce que** l'angle d'obliquité de la surface oblique par rapport au plan radial (21) est sélectionné entre environ 5° et 35° et vaut de préférence par exemple environ 16,5°.

3. Procédé selon l'une des revendications 1 ou 2, **caractérisé en ce que** les deux surfaces de butée (17, 18) du boîtier (11) sont orientées obliquement et sont configurées comme surfaces obliques, l'angle d'obliquité étant de préférence identique pour les deux.

4. Procédé selon l'une des revendications 1 ou 2, **caractérisé en ce qu'**une surface de butée (18) du boîtier (11) est orientée obliquement et est configurée comme surface oblique et **en ce que** l'autre surface de butée (17) s'étend en ligne droite et sensiblement dans un plan radial (21) orienté à angle droit par rapport à l'axe transversal (19) du boîtier.

5. Procédé selon l'une des revendications 1 à 4, **caractérisé en ce que** les deux surfaces de butée (17, 18) du boîtier (11) sont décalées l'une par rapport à l'autre dans la direction de l'axe transversal (19) du boîtier.

6. Procédé selon l'une des revendications 1 à 5, **caractérisé en ce que** la force est supérieure à la force de fermeture nécessaire pour assurer l'étanchéité lorsque le clapet (12) est en position de fermeture.

7. Procédé selon la revendication 1, **caractérisé en ce que** la résistance mécanique de l'un des matériaux métalliques, par exemple celui du clapet (12), est supérieure à celle de l'autre matériau métallique, par exemple celui du boîtier (11), ou inversement.

8. Procédé selon la revendication 7, **caractérisé en ce qu'**un des matériaux métalliques, par exemple celui de la bordure (15, 16) du clapet (12), présente sensiblement le double de la résistance mécanique de l'autre matériau métallique, par exemple celui de la surface de butée (17, 18) du boîtier, ou inversement.

9. Procédé selon l'une des revendications 1 à 8, **caractérisé en ce que** la résistance mécanique du matériau métallique du clapet (12) et au moins de sa bordure (15, 16) vaut sensiblement de 450 N/mm² à 750 N/mm² et de préférence par exemple environ 700 N/mm².

10. Procédé selon l'une des revendications 1 à 9, **caractérisé en ce que** la résistance mécanique du matériau métallique du boîtier (11) et au moins des surfaces de butée (17, 18) du boîtier est comprise entre environ 200 N/mm² et 400 N/mm² et vaut de préférence par exemple environ 350 N/mm².

11. Procédé selon les revendications 1 à 10, **caractérisé en ce que** le boîtier (11) et au moins ses surfaces de butée (17, 18) sont formés d'un matériau en métal léger, par exemple en aluminium, en alliage d'AlSiMg ou similaires ou est constitué d'une pièce coulée, par exemple en fonte grise ou similaires.

12. Procédé selon les revendications 1 à 11, **caractérisé en ce que** le clapet (12) et au moins sa bordure (15, 16) sont formés en acier et par exemple en acier allié.

13. Procédé selon l'une des revendications 1 à 12, **caractérisé en ce qu'**une rainure (22) dont la section transversale essentiellement en forme de V est découpée une fois et de manière permanente au moyen du clapet (12) dans au moins une surface de butée (17, 18) et en particulier dans une surface oblique.

14. Procédé selon la revendication 12, **caractérisé en ce que** sur sa bordure (15, 16) associée à la ou les surfaces de butée (17, 18) et en particulier à une surface oblique, le clapet (12) découpe la surface de butée par un bord tranchant.

15. Procédé selon la revendication 14, **caractérisé en ce que** le bord tranchant est déformé plastiquement au moins légèrement lors de la découpe unique dans la surface de butée (17, 18), en adaptation à la forme de la section transversale et aux dimensions de la section transversale de la rainure (22) qui y a été découpée.

16. Procédé selon l'une des revendications 1 à 15, **caractérisé en ce que** la force exercée une fois sur le clapet (12) pour former l'étanchéité dans sa position de fermeture est exercée dans la direction de pivotement du clapet (12) autour de son axe longitudinal (14) et donc dans la direction de fermeture du clapet (12).

17. Procédé selon l'une des revendications 4 à 16, **caractérisé en ce que** la force exercée une fois sur le clapet (12) pour former l'étanchéité lorsqu'il est dans sa position de fermeture est exercée sur le clapet (12) dans la direction radiale et de telle sorte que le clapet soit déplacé sur la surface de butée (17) du boîtier (11) qui s'étend en ligne droite, en direction de l'autre surface de butée (18) orientée obliquement et configurée comme surface oblique et vient buter par sa bordure (16), associée à cette surface de butée (18), sur la surface oblique et découpe de préférence cette surface oblique.

18. Procédé selon l'une des revendications 1 à 17, **caractérisé en ce qu'**avant l'application de la force destinée à former l'étanchéité dans sa position de fermeture, le clapet (12) est grossièrement centré par rapport à un arbre (13) de clapet et est ensuite relié solidairement à l'arbre (13) du clapet.

19. Procédé selon l'une des revendications 16 à 18, **caractérisé en ce que** la force exercée dans la direction de pivotement du clapet (12) est appliquée par des organes de poussée qui agissent sur les moitiés du clapet.

20. Procédé selon l'une des revendications 16 à 18, **caractérisé en ce que** la force exercée dans la direction de pivotement du clapet (12) est formée par application d'un couple de rotation sur l'arbre (13) du clapet.

21. Procédé selon les revendications 4 ou 17, **caractérisé en ce qu'**avant l'application de la force destinée à former l'étanchéité dans sa position de fermeture, une force de fermeture définie qui agit sur une moitié de clapet est appliquée sur le clapet (12), sa bordure (15) associée étant repoussée par la force de fermeture sur la surface de butée (17) associée, qui s'étend en ligne droite, du boîtier (11) et **en ce qu'**ensuite, pendant l'action de la force de poussée, le clapet (12) est repoussé par la force exercée dans la direction rectiligne contre l'autre surface de butée (18) orientée obliquement et configurée comme surface oblique.

22. Procédé selon la revendication 21, **caractérisé en ce que** l'application de la force de poussée et de la force a lieu avant la fixation du clapet (12) sur ou dans un arbre (13) du clapet.

23. Procédé selon la revendication 22, **caractérisé en ce qu'**après que la force de poussée et que la force ont été exercées, le clapet (12) est relié solidairement à l'arbre (13) du clapet, par exemple par soudage et en particulier par soudage au laser.

24. Dispositif de contrôle du débit d'un fluide gazeux ou liquide, **caractérisé en ce que** ce dispositif (10) a été fabriqué en appliquant le procédé selon l'une ou plusieurs des revendications précédentes.

25. Dispositif selon la revendication 24, **caractérisé en ce que** des deux côtés de l'axe longitudinal (14) du clapet (12), le boîtier (11) présente des surfaces de butée (17, 18) qui s'étendent de préférence sensiblement en demi-cercles, et dont au moins l'une (18) est orientée obliquement par rapport à un plan radial (21) qui s'étend sensiblement à angle droit par rapport à l'axe transversal (19) du boîtier et est configurée comme surface oblique.

26. Dispositif selon les revendications 24 ou 25, **caractérisé en ce que** l'angle d'obliquité de la surface oblique par rapport au plan radial est compris entre environ 5° et 35° et est de préférence d'environ 16,5°.

27. Dispositif selon l'une des revendications 24 à 26, **caractérisé en ce que** les deux surfaces de butée (17, 18) sont orientées obliquement et sont configurées comme surfaces obliques.

28. Dispositif selon l'une des revendications 24 à 27, **caractérisé en ce que** les deux surfaces de butée (17, 18) du boîtier (11) sont décalées l'une par rapport à l'autre dans la direction de l'axe transversal (19) du boîtier.

29. Dispositif selon l'une des revendications 24 à 28, **caractérisé en ce qu'**au moins une surface oblique (17, 18) contient une rainure (22) dont la section transversale a sensiblement la forme d'un V et qui correspond à la forme de la section transversale et à la taille de la section transversale de la bordure (15, 16) associée du clapet (12).

30. Dispositif selon l'une des revendications 24 à 29, **caractérisé en ce que** tant le boîtier (11) et au moins les surfaces de butée (17, 18) du boîtier que le clapet (12) et au moins sa bordure (15, 16) sont réalisés en un matériau métallique.

31. Dispositif selon l'une des revendications 24 à 30, **caractérisé en ce que** la résistance mécanique de l'un des matériaux métalliques, par exemple celui du clapet (12), est supérieure à celle de l'autre matériau métallique, par exemple celui du boîtier, ou inversement.

32. Dispositif selon l'une des revendications 24 à 31, **caractérisé en ce qu'**un des matériaux métalliques, par exemple celui de la bordure (15, 16) du clapet (12), présente sensiblement le double de la résistance mécanique de l'autre matériau métallique, par exemple celui de la surface de butée (17, 18) du boîtier, ou inversement.

33. Dispositif selon l'une des revendications 30 à 32, **caractérisé en ce que** la résistance mécanique du matériau métallique du clapet (12) et au moins de sa bordure (15, 16) vaut sensiblement de 450 N/mm² à 750 N/mm² et de préférence par exemple environ 700 N/mm².

34. Dispositif selon l'une des revendications 30 à 32, **caractérisé en ce que** la résistance mécanique du matériau métallique du boîtier (11) et au moins des surfaces de butée (17, 18) du boîtier est comprise entre environ 200 N/mm² et 400 N/mm² et vaut de préférence par exemple environ 350 N/mm².

35. Dispositif selon l'une des revendications 24 à 34, **caractérisé en ce que** le boîtier (11) et au moins ses surfaces de butée (17, 18) sont formés d'un matériau en métal léger, par exemple en aluminium, en alliage d'AlSiMg ou similaires ou est constitué d'une pièce coulée, par exemple en fonte grise ou similaires.

36. Dispositif selon l'une des revendications 24 à 35, **caractérisé en ce que** le clapet (12) et au moins sa bordure (15, 16) sont formés en acier et par exemple en acier allié.
